(19) Europäisches Patentamt
European Patent Office
Office européen des brevets

(11) **EP 2 989 677 B1**

(12) **FASCICULE DE BREVET EUROPEEN**

(45) Date de publication et mention
de la délivrance du brevet:
**21.06.2017 Bulletin 2017/25**

(21) Numéro de dépôt: **14720079.4**

(22) Date de dépôt: **23.04.2014**

(51) Int Cl.:
*H01M 10/48* (2006.01)     *G01R 31/36* (2006.01)
*H01M 10/052* (2010.01)    *H01M 2/34* (2006.01)
*H01M 10/42* (2006.01)

(86) Numéro de dépôt international:
**PCT/EP2014/058247**

(87) Numéro de publication internationale:
**WO 2014/173956 (30.10.2014 Gazette 2014/44)**

(54) **DISPOSITIF DE GESTION D'UN ACCUMULATEUR**

VORRICHTUNG ZUR VERWALTUNG EINES AKKUMULATORS

DEVICE FOR MANAGING AN ACCUMULATOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.04.2013 FR 1353708**

(43) Date de publication de la demande:
**02.03.2016 Bulletin 2016/09**

(73) Titulaire: **Commissariat à l'Énergie Atomique
et aux Énergies Alternatives
75015 Paris (FR)**

(72) Inventeurs:
• **GENIES, Sylvie**
  **F-38120 ST EGREVE (FR)**
• **ALIAS, Mélanie**
  **F-77167 POLIGNY (FR)**
• **COUTIER, Caroline**
  **F-38000 GRENOBLE (FR)**
• **LE BARON, Estelle**
  **F-38530 BARRAUX (FR)**
• **MAILLEY, Sophie**
  **F-38730 LE PIN (FR)**

(74) Mandataire: **Brevalex
95, rue d'Amsterdam
75378 Paris Cedex 8 (FR)**

(56) Documents cités:
**WO-A2-2011/072295     DE-A1-102010 013 017**

**US-B1- 6 407 553**

• DATABASE EPODOC [Online] EUROPEAN
  PATENT OFFICE, THE HAGUE, NL; "SWELLING
  DETECTION/PROTECTION SYSTEM OF
  BATTERY CARTRIDGE MODULE AND METHODS
  THEREOF AND BATTERY CARTRIDGE MODULE
  PROTECTED THEREBY", XP002715223,
  Database accession no. KR-20070057024-A -&
  KR 2008 0109121 A (LG CHEMICAL LTD [KR]) 17
  décembre 2008 (2008-12-17)
• DATABASE EPODOC [Online] EUROPEAN
  PATENT OFFICE, THE HAGUE, NL;
  "OVERCHARGE DETECTION", XP002715224,
  Database accession no. JP-13258781-A -& JP S58
  34577 A (TOKYO SHIBAURA ELECTRIC CO) 1
  mars 1983 (1983-03-01)
• DATABASE EPODOC [Online] EUROPEAN
  PATENT OFFICE, THE HAGUE, NL; "CHARGING
  SYSTEM, BATTERY, AND CHARGER",
  XP002715225, Database accession no.
  JP-2006288244-A -& JP 2008 109742 A (SONY
  CORP) 8 mai 2008 (2008-05-08)
• DATABASE EPODOC [Online] EUROPEAN
  PATENT OFFICE, THE HAGUE, NL; "CHARGING
  OF CELL SET", XP002715226, Database
  accession no. JP-33976991-A -& JP H05 152003
  A (HITACHI MAXELL) 18 juin 1993 (1993-06-18)
• Vishay Precision Group: "General Purpose Strain
  Gages - Rectangular Rosette 125LR", , 2 février
  2010 (2010-02-02), pages 1-2, XP055084953,
  Extrait de l'Internet:
  URL:http://www.vishaypg.com/docs/11198/125
  lr.pdf [extrait le 2013-10-22]

**Description**

**DOMAINE TECHNIQUE**

La présente demande appartient au domaine technique des générateurs électrochimiques. L'invention porte plus particulièrement sur un dispositif et son procédé d'utilisation, permettant le contrôle et le suivi d'un accumulateur lors de son utilisation. En d'autres termes, l'invention concerne le domaine technique associé à la gestion du fonctionnement d'un accumulateur électrochimique.

**ÉTAT DE LA TECHNIQUE ANTÉRIEURE**

Dans le cadre de la présente demande, le terme accumulateur désigne une cellule électrochimique composée d'une électrode positive et d'une électrode négative, séparées par un séparateur, l'ensemble étant en contact avec un électrolyte.

L'accumulateur est isolé de l'environnement extérieur par une enveloppe qui peut être ouverte, partiellement étanche ou parfaitement étanche en fonction de la technologie considérée et des mécanismes électrochimiques mis en oeuvre. Les matériaux et les additifs dont certains peuvent être polluants ou toxiques sont ainsi contenus dans un compartiment sans risque de contamination avec l'extérieur. L'ensemble forme alors un objet unitaire que nous nommons élément ci-dessous. Pour des raisons pratiques et afin d'accroître l'énergie du système de stockage considéré, plusieurs éléments d'accumulateur sont regroupés dans une seconde enveloppe de manière à former une batterie ou un module ou encore un pack. Le module ou le pack peut contenir plusieurs accumulateurs connectés en série et/ou en parallèle.

Il existe différents types d'accumulateurs caractérisés par les éléments chimiques qui les composent. Par exemple, lorsqu'un accumulateur comporte une cathode et une anode permettant l'incorporation et la désincorporation réversible d'ions lithium (par des mécanismes d'insertion ou de conversion, dans un métal pour former un alliage), l'accumulateur est de type lithium-ion ou plus généralement nommé accumulateur au lithium. Plus précisément, un accumulateur lithium-ion peut comporter une électrode négative (cathode lors du processus de décharge) composée de carbone graphitique ou d'un alliage métallique, éventuellement de dimensions nanométriques, composé de silicium ou d'étain, ou bien d'un oxyde de titane lithié de type spinelle $Li_4Ti_5O_{12}$. La cathode (anode lors du processus de décharge) peut par exemple comporter des oxydes métalliques de transition comprenant du cobalt ($LiCoO_2$), et/ou du manganèse ($LiMn_2O_4$), et/ou du nickel ($Li(Co,Ni,Mn)O_2$), ou du phosphate de fer lithié ($LiFePO_4$). L'échange réversible d'ions lithium entre l'électrode positive et l'électrode négative est alors possible, les ions lithium libérés par la cathode en décharge sont incorporés à l'anode, les réactions inverses se produisant en charge. Les électrodes sont immergées dans une solution organique, composée généralement de solvants organiques aprotiques anhydres, dans lesquels est dissous un sel de lithium. La présence d'un électrolyte organique est nécessaire du fait de la sensibilité des composants (matières actives, sels de lithium) à l'eau, cela implique un comportement lors de la fin de charge de l'accumulateur au lithium différent des électrolytes aqueux comme expliqué plus avant dans le texte.

Les éléments composant une cellule électrochimique au lithium peuvent être agencés de différentes façons. Par exemple, ces différents éléments peuvent être superposés de manière à former un prisme ou un cylindre. Un accumulateur de forme cylindrique peut être obtenu en enroulant une cellule électrochimique sur elle-même. Eventuellement, cet enroulement peut comprendre un noyau central sur lequel la cellule électrochimique est enroulée. Le noyau central ou mandrin peut être de type métallique ou plastique. L'enveloppe hermétique permettant d'isoler de l'environnement extérieur les composants de la cellule électrochimique peut être souple et thermoscellée ou bien rigide de manière à former un boîtier rigide dont les extrémités et pourtours sont soudés. Une enveloppe peut donc être composée de matériaux plastiques ou métalliques de type acier inoxydable ou aluminium.

L'utilisation normale d'un accumulateur au lithium comprend des cycles de charge (ou chargement) et de décharge (ou déchargement) de la cellule électrochimique. Les ions lithium migrent ou s'insèrent de façon réversible dans les matériaux composant les électrodes lors de ces cycles, plus précisément, les électrodes subissent des réactions d'oxydation ou de réduction modifiant leur structure cristalline et leur volume lors de ces cycles. En fonction des déformations subies par les électrodes, il est possible de savoir si l'accumulateur est dans un processus de chargement ou déchargement. On parle également d'« état de charge » pour caractériser ces cycles.

Les accumulateurs au lithium se distinguent des autres types d'accumulateur par leur non-tolérance aux phénomènes de surcharge ou de surdécharge électrique. En effet, une cellule électrochimique au lithium comprend un électrolyte organique qui contrairement à un électrolyte aqueux, ne permet pas de consommer par l'existence d'une réaction secondaire un courant de surcharge s'établissant dans l'accumulateur lors d'un cycle de charge trop long ou anormal. Un électrolyte aqueux permet la consommation d'un tel courant de surcharge par la réaction classique d'électrolyse d'eau, c'est-à-dire, par formation d'oxygène à l'électrode positive et formation d'hydrogène à l'électrode négative, par oxydation et réduction de l'eau respectivement. Pour les accumulateurs au lithium, sauf introduction d'additifs spécifiques, aucune réaction électrochimique secondaire et réversible ne peut se mettre en place au niveau de l'électrolyte organique pour consommer une partie du courant de surcharge. Le courant de surcharge dégrade alors les structures cristallines des matériaux électrodes dans lesquelles le lithium s'incorpore et l'électrolyte sous forme gazeuse. Le gaz ainsi formé est confiné dans l'enveloppe du pack, augmentant ainsi sa pression interne. Un courant de surcharge trop important peut donc provoquer la déflagration de l'enveloppe qui isole l'accumulateur de son environnement extérieur. En cas de surdécharge électrique, la couche de surface protégeant l'électrode en graphite est décomposée sous forme gazeuse, et il se produit un phénomène de surlithiation au niveau de l'électrode positive entraînant un accroissement de son volume. La surdécharge d'un accumulateur peut donc provoquer les mêmes effets qu'une surcharge. Les phénomènes de surcharge électrique peuvent également provoquer un emballement thermique de l'accumulateur pouvant provoquer la fonte de ces composants et/ou de l'enveloppe de protection. Afin d'empêcher ces dégradations irréversibles du pack, il est nécessaire de connaître les limites d'un cycle de chargement et de déchargement admissibles pour un accumulateur au lithium. En d'autres termes, il est nécessaire de connaître à partir de quelles valeurs de courant électrique, un accumulateur au lithium est dans un état de surcharge ou de surdécharge. On qualifie ces états par le terme d' « état de sécurité ».

Les composants d'un accumulateur au lithium se dégradent également sous forme gazeuse, lors de son utilisation et de son vieillissement. Le gaz ainsi formé est libéré de façon beaucoup plus lente et progressive que lorsque l'accumulateur est dans un état de sécurité. De même que ci-dessus, le vieillissement de l'accumulateur peut provoquer l'explosion du pack ou emballement thermique de l'accumulateur. En effet, un vieillissement avancé de l'accumulateur peut dégrader les électrodes de façon inhomogène et modifier les propriétés d'incorporation du lithium au niveau d'une des électrodes. La réaction électrochimique peut ainsi être déséquilibrée au niveau des électrodes et entraîner l'emballement thermique de l'accumulateur. Pour des raisons de sécurité, il est également nécessaire de connaître l'état de vieillissement de l'accumulateur, que l'on nomme également « état de santé ».

Il existe différents dispositifs permettant de connaître ou de détecter l'un des états mentionnés ci-dessus d'un pack.

Par exemple, pour prévenir qu'un pack se trouve dans un état de sécurité, une valve ou une soupape de surpression peut être connectée à l'enveloppe du pack. De ce fait, lorsque la pression à l'intérieur de l'enveloppe dépasse une valeur critique, la soupape relâche dans l'environnement extérieur le gaz contenu dans l'enveloppe. Cette solution est extrême car d'une part elle libère dans l'environnement des composés chimiques nuisibles que l'on souhaitait confinés dans l'enveloppe et d'autre part l'accumulateur n'est plus utilisable car l'étanchéité de l'enveloppe est rompue de façon irréversible.

Le risque de déflagration ou d'explosion du pack peut également être limité par l'utilisation d'un fusible thermique, permettant la mise hors service des cellules électrochimiques présentes dans un même pack, lorsque la température du pack dépasse une valeur critique qui est comprise entre 30°C et 50°C au-dessus de sa température normale de fonctionnement. Une fois le fusible thermique activé, les connexions électriques entre les accumulateurs et leur environnement extérieur sont coupées de manière irréversible. Un autre inconvénient lié à cette solution est l'espace occupé par le fusible thermique à l'intérieur du pack. De plus, une vigilance doit être également apportée pour minimiser les résistances de contact au niveau des connexions électriques lorsque des fusibles thermiques additionnels sont ajoutés au niveau du pack (« Investigating electrical contact résistance losses in lithium-ion battery assemblies for hybrid and electric vehicles », P. Taheri, S. Hsieh, M.Bahrami, Journal of Power Sources, 196 (2011) 6525-6533). En d'autres termes, la présence d'un ou plusieurs fusibles thermiques dans un pack augmente les risques de défaillance du pack et augmente le volume de l'enveloppe pour isoler les cellules électrochimiques de leur environnement extérieur.

Selon une autre alternative, des éléments séparateurs (ou « shutdown » en anglais) peuvent être placés à l'intérieur du pack. Un élément séparateur comporte trois films en polymères. Le film central en polyéthylène a un point de fusion plus bas que les deux autres films périphériques en polypropylène. Les films périphériques subissent vers 110°C un colmatage de leur porosité, ils agissent alors comme un « coupe-circuit chimique ». Le film central, plus stable en température, permet de maintenir la séparation physique entre les électrodes. Lorsque la température interne du pack dépasse une valeur critique comprise entre 80°C et 180°C, le pack ne délivre et ne reçoit plus aucun courant électrique. Au-delà de 180°C, les films en polymère perdent leur intégrité mécanique et conduisent à la mise en court-circuit des électrodes (« Battery Separators », P. Arora, Z. Zhang, Chem. Rev., 104 (2004) 4419-4462). De même que les dispositifs ci-dessus, les éléments séparateurs dégradent de façon irréversible le pack lorsque celui-ci se trouve dans un état de sécurité. En d'autres termes, il n'est plus possible d'utiliser le pack après l'enclenchement de ce dispositif de sécurité.

Une autre solution pour prévenir l'utilisation d'un pack dans un état de sécurité, consiste à placer des additifs, appelés molécules navettes Redox, au niveau de l'électrolyte d'une cellule électrochimique, capables de s'oxyder à la place du matériau composant l'électrode positive, lors d'une surcharge de l'accumulateur. Ces molécules absorbent l'excès de charges injectées dans le pack durant la surcharge et bloquent ainsi le potentiel de la cathode au potentiel d'oxydation des molécules REDOX jusqu'à la fin de la surcharge (« Redox shuttles for safer lithium-ion batteries », Z. Chen, Y. Qin, K. Amine, Electrochimica Acta, 54 (2009) 5605-5613).

Selon une autre solution, l'état de santé d'un pack peut être contrôlé par la mesure et le suivi de la tension électrique à ses bornes. Pour cela, la variation de tension doit être suffisamment importante pour être détectée. Or, dans un pack constitué de plusieurs accumulateurs, cette mesure est globalisée à l'ensemble des accumulateurs contenus dans le pack. De ce fait, la surcharge d'un accumulateur peut ne pas être détectée parmi plusieurs accumulateurs fonctionnant normalement. Par ailleurs, la mesure de la tension électrique aux bornes du pack peut ne pas fournir une information fiable dès lors que la tension électrique mesurée n'est pas spécifique d'une valeur de l'état de charge. C'est par exemple le cas lorsque des accumulateurs présentent sur un large domaine d'état de charge le même potentiel. On peut citer le cas de l'accumulateur $LiFePO_4/Li_4Ti_5O_{12}$ dont les deux matériaux actifs $LiFePO_4$ et $Li_4Ti_5O_{12}$ présentent tous deux une courbe de potentiel plate avec large plateau. La variation de tension d'un tel accumulateur est ainsi quasiment invariante sur une large plage d'état de charge, la valeur de tension n'est donc pas spécifique de l'état de charge de l'élément (« Lithium Intercalation and Deintercalation Processes in Li4Ti5O12 and LiFePO4 », D. V. Safronov, S. A. Novikova, A. M. Skundin, and A. B. Yaroslavtsev, Inorganic Materials, 2012, Vol. 48, No. 1, pp. 57-61). Cela a pour conséquence de complexifier l'équilibrage de l'état de charge inter-éléments, basé sur la mesure de la différence de tension entre chaque élément. De plus, les conditions d'utilisation du pack (valeur du courant électrique aux bornes du pack, température interne) peuvent modifier le comportement du pack et ainsi perturber l'interprétation des mesures. L'accumulateur peut de ce fait se trouver dans un état de sécurité non détecté.

Des jauges de contraintes peuvent également être employées pour connaître l'état de charge d'un regroupement d'accumulateurs.

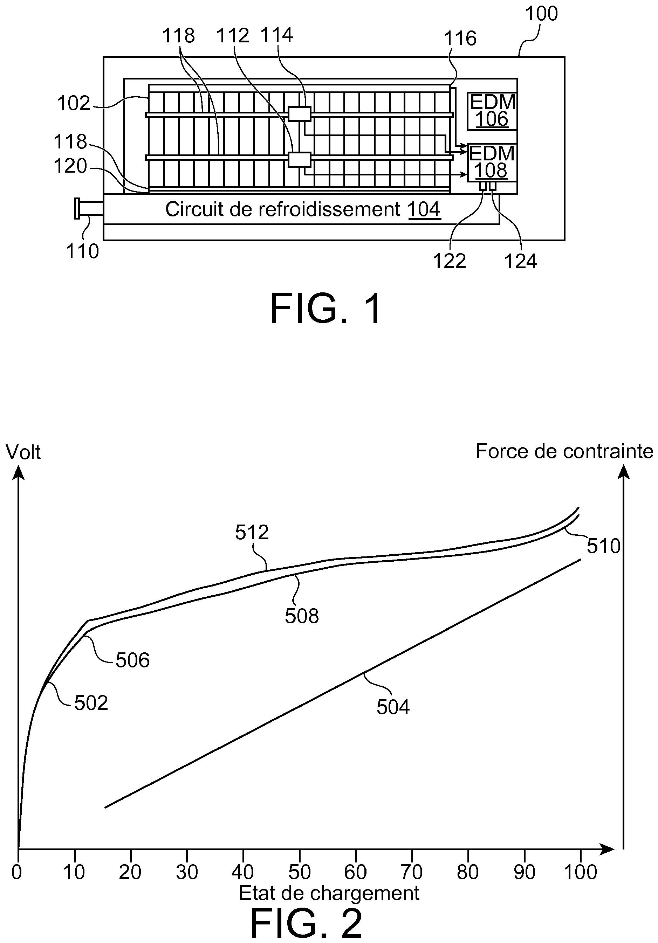

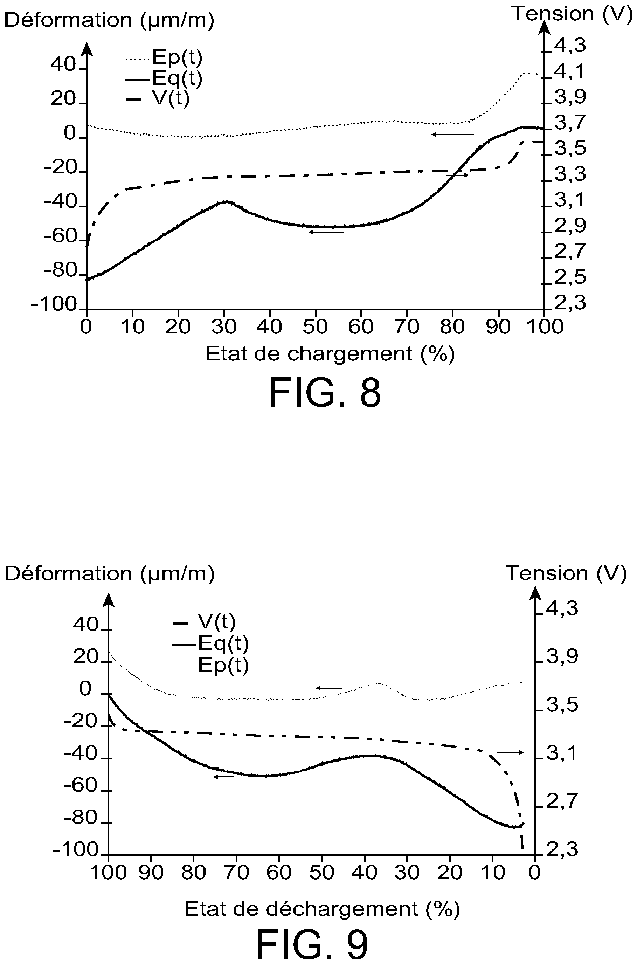

Par exemple, le document US 6,407,553 mentionne l'utilisation de deux jauges de contrainte (24, 26) ou de quatre jauges de contrainte (40, 42, 44, 46), collées respectivement à la surface d'un pack (22) ou (48) comprenant plusieurs accumulateurs (figures 2 et 8 dudit document). A partir des mesures réalisées par lesdites jauges, il est alors possible de connaître l'état de charge du pack (22, 48).

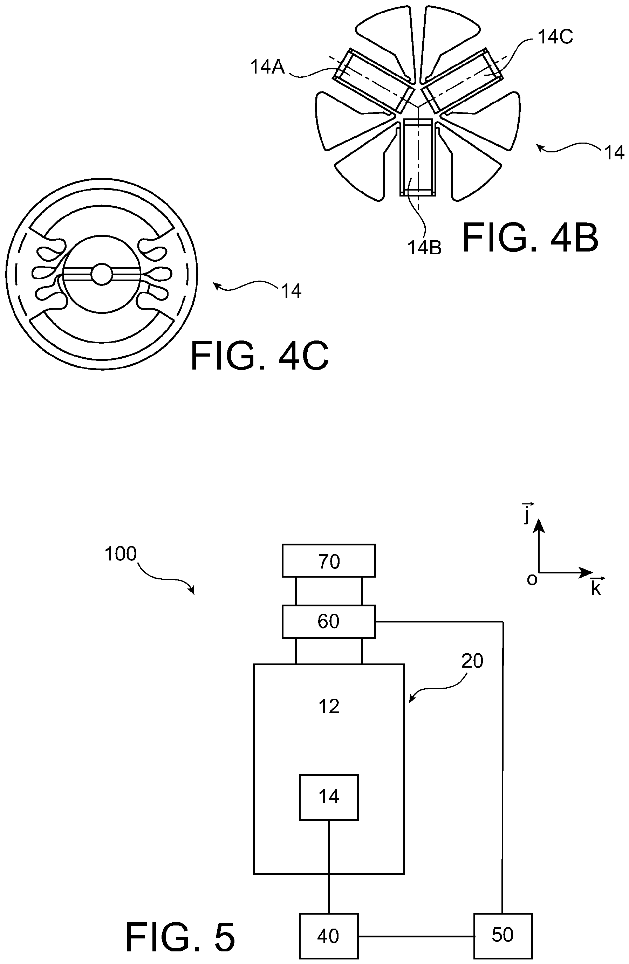

Selon un autre exemple, le document WO2011/072295 mentionne plusieurs accumulateurs au lithium (102) maintenus ensemble par l'intermédiaire d'une bande (118) comprenant une jauge de contrainte (114) (figure 1). La jauge de contrainte permet de mesurer la variation de volume du groupement d'accumulateurs, par l'intermédiaire des déformations de la bande (118). A partir de ces mesures, il est possible de connaître l'état de charge, de sécurité et de santé de l'ensemble des accumulateurs (102). La figure 2 ci-dessous, correspondant à la figure 5 du document WO2011/072295, cette figure montre clairement que les mesures (504) réalisées par la jauge de contrainte (118) sont insuffisantes pour détecter une valeur de charge minimale pour l'ensemble des accumulateurs (paragraphes [036, 038]). Pour cela, il est nécessaire de compléter ces mesures par des mesures de tension effectuées aux bornes des accumulateurs.

Le document DE102010013017 décrit un dispositif de sécurité pour batteries.

Le document KR20080109121 décrit un système de détection de gonflement d'une batterie.

Le document JPS5834577 décrit un dispositif de détection de surcharge d'une batterie.

Les accumulateurs au lithium sont des technologies sensibles qui requièrent une gestion et un contrôle rigoureux de leur état de charge pour prévenir de leur utilisation dans un état de sécurité, pour permettre leur emploi dans des conditions optimum et en toute sécurité. Pour cela, on cherche à pouvoir contrôler l'état de charge et connaître l'état de santé d'un accumulateur. L'un des objectifs de la présente demande est donc de proposer un dispositif, ainsi que son procédé d'utilisation, permettant de contrôler l'état de charge et de connaître l'état de santé d'un accumulateur.

## EXPOSÉ DE L'INVENTION

L'invention a pour but d'apporter une solution aux problèmes précédemment mentionnés.

L'invention concerne un dispositif de gestion d'un accumulateur, comportant :

- une pluralité de jauges de contraintes comprenant au moins trois jauges de contraintes, les jauges de contraintes étant agencées de façon à mesurer les contraintes selon au moins trois axes de contraintes distincts,
- un dispositif de mesure permettant de mesurer les déformations subies par chaque jauge selon son axe de contraintes,
- un interrupteur électrique réversible, l'interrupteur permettant de connecter et/ou de déconnecter électriquement l'accumulateur de son environnement client,
- un dispositif de calcul commandant, ou spécialement programmé pour commander, l'ouverture et la fermeture de l'interrupteur électrique, en fonction des mesures réalisées par le dispositif de mesure.

Le terme axe de contraintes définit l'axe selon lequel une jauge de contraintes mesure les déformations mécaniques qu'elle subit.

L'interrupteur permet de connecter et/ou de déconnecter électriquement un dispositif de son environnement client. L'environnement client désigne l'ensemble des éléments conducteurs connectés électriquement audit dispositif et susceptibles de charger et/ou de décharger électriquement le dispositif, par exemple un accumulateur.

Le dispositif de calcul peut comporter un dispositif de stockage comprenant une première série de valeurs et une seconde série de valeurs différente de la première série de valeurs. Le dispositif de calcul peut commander la fermeture de l'interrupteur électrique lorsque les mesures réalisées par le dispositif de mesure appartiennent à la première série de valeurs, ou bien l'ouverture de l'interrupteur électrique lorsque les mesures réalisées par le dispositif de mesure appartiennent à la seconde série de valeurs.

Le dispositif de calcul peut mettre en oeuvre un algorithme comportant une étape de calcul de l'élongation-contraction (ou traction-compression) des jauges de contraintes mesurée par rapport à leur état initial. Le dispositif de calcul peut comporter un microprocesseur couplé à une mémoire de stockage. Le dispositif de calcul peut par exemple être un ordinateur.

Le dispositif de calcul peut mettre en oeuvre un algorithme identifiant le résultat du calcul de l'évolution des contraintes, mesurées par la pluralité de jauges de contraintes, dans la première série de valeurs ou dans la seconde série de valeurs stockées par le dispositif de calcul.

L'étape de calcul de l'évolution des contraintes peut comprendre le calcul de l'abscisse (d(t)) et du rayon (r(t)) du cercle de Mohr à un temps t.

Eventuellement, le dispositif de calcul peut comporter un dispositif d'affichage permettant de visualiser les valeurs calculées de d(t) et de r(t). Le couple de valeurs (d(t) ; r(t)) peut être représenté sous la forme d'une fonction f(t), tracée dans un repère orthogonal, dans lequel les valeurs d(t) correspondent aux abscisses et les valeurs r(t) aux ordonnés.

La pluralité de jauges de contraintes peut être maintenue au contact de l'enveloppe de l'accumulateur, comportant les bornes de connexion de polarité opposée pour la sortie et l'entrée du courant électrique, de sorte que les jauges de contraintes mesurent les contraintes mécaniques exercées sur l'enveloppe. En fonction des technologies d'accumulateur considéré, l'enveloppe peut être hermétique de sorte à contenir au moins un accumulateur contenu dans ladite enveloppe de façon étanche.

La pluralité de jauges de contraintes peut être maintenue, fixée ou collée sur une ou plusieurs faces externes de l'enveloppe, une face interne est une face en vis-à-vis de l'accumulateur. A l'inverse, les jauges de contraintes peuvent être positionnées dans l'enveloppe, c'est-à-dire, fixées contre une face interne de l'enveloppe ou contre un élément de l'accumulateur. Le positionnement des jauges est optimisé pour mesurer les contraintes subies par l'enveloppe ou l'accumulateur constituant le pack, avec un signal d'amplitude maximum. Les emplacements des jauges à privilégier sont localisés dans les zones de déformation maximale de l'élément, soit sur la zone médiane à mi-hauteur des bases pour un élément cylindrique, soit sur les zones traversées par les droites diagonales d'un élément prismatique, à proximité des angles.

Une borne de connexion de l'accumulateur, contenu dans son enveloppe, et accessible sur l'enveloppe peut être connectée à l'interrupteur électrique appartenant au dispositif de gestion, et à au moins une borne de connexion d'un autre accumulateur, lui-même contenu dans sa propre enveloppe. Eventuellement, une borne de connexion de l'accumulateur peut être connectée à la borne de connexion de même polarité de plusieurs autres accumulateurs contenus dans leur propre enveloppe. L'assemblage d'accumulateurs ainsi réalisé peut être rassemblé dans une seconde enveloppe avec deux bornes de connexion de chaque polarité négative et positive présentes sur ladite enveloppe.

L'accumulateur peut être un accumulateur de forme prismatique ou cylindrique, éventuellement enroulé autour d'un mandrin. L'accumulateur peut être un accumulateur au lithium, ou un accumulateur d'une technologie nickel cadmium ou nickel-métal hydrure de conception équivalente (cylindrique, prismatique).

La présente demande concerne également un pack comprenant une enveloppe contenant au moins deux accumulateurs tel que mentionné ci-dessus. Chaque accumulateur contenu dans le pack peut comporter son propre dispositif de gestion.

L'invention concerne aussi un procédé d'étalonnage d'un dispositif de gestion décrit ci-dessus, comprenant une étape d'enregistrement d'une première série de mesures, sur le dispositif de stockage du dispositif de calcul, lesdites mesures étant réalisées par le dispositif de mesure, lors de la charge et de la décharge d'un accumulateur, de sorte à préserver l'intégrité de l'accumulateur.

Le procédé d'étalonnage peut également comporter une étape d'enregistrement d'une seconde série de mesures, sur le dispositif de stockage du dispositif de calcul, lesdites mesures étant réalisées par le dispositif de mesure, lors de la charge et de la décharge d'un accumulateur, de sorte à préserver d'un endommagement irréversible de l'intégrité de l'accumulateur.

En d'autres termes, les valeurs appartenant à la première série de mesures peuvent être associées à un état de charge. Les valeurs appartenant à la seconde série de mesures peuvent être associées à un état de santé ou un état de vieillissement avancé.

Une fois le dispositif de gestion étalonné, celui-ci peut être fixé sur un pack similaire ou identique au pack ci-dessus, de sorte à pouvoir gérer de façon optimum l'utilisation du pack.

Autrement dit, l'invention porte sur un dispositif de gestion et son procédé d'étalonnage, s'appuyant sur l'utilisation couplée de jauges de contraintes positionnées suivant des orientations privilégiées. Les mesures des jauges de contraintes sont ensuite corrélées entre elles afin d'identifier l'état de charge ou l'état de sécurité et/ou l'état de vieillissement du pack. Le dispositif de gestion permet avantageusement de connaître en temps réel l'un des états précédents d'un pack similaire ou identique au pack témoin. En fonction de l'état du pack, le dispositif de gestion permet de façon réversible de connecter ou de déconnecter le pack de son environnement client afin de préserver son intégrité.

Avantageusement, un dispositif de gestion permet de gérer le fonctionnement ou l'utilisation d'un pack comprenant un accumulateur. Il est également possible de connaître précisément l'état de chaque accumulateur constituant un pack comprenant plusieurs accumulateurs.

## BRÈVE DESCRIPTION DES DESSINS

D'autres détails et caractéristiques de l'invention apparaîtront de la description qui va suivre, faite en regard des figures annexées suivantes. Les parties identiques, similaires ou équivalentes des différentes figures portent les mêmes références de façon à faciliter le passage d'une figure à une autre. Les différentes parties représentées sur les figures ne le sont pas nécessairement selon une échelle uniforme, pour rendre les figures plus lisibles.

La figure 1 représente la figure 1 du document WO2011/072295.

La figure 2 représente la figure 5 du document WO2011/072295.

La figure 3 représente une coupe de profil avec une pluralité de jauges de contraintes fixée sur l'enveloppe d'un accumulateur au lithium sans mandrin au sein d'un pack.

Les figures 4A à 4C représentent plusieurs dispositifs de jauges de contraintes.

La figure 5 représente un dispositif de gestion fixé sur un pack comprenant un accumulateur au lithium.

La figure 6 représente des mesures réalisées par la pluralité de jauges de contraintes fixée à un pack comprenant un accumulateur au lithium sans mandrin, lors d'un cycle de chargement de l'élément ou du pack.

La figure 7 représente des mesures réalisées par la pluralité de jauges de contraintes fixée à un pack comprenant un accumulateur au lithium sans mandrin, lors d'un cycle de déchargement de l'élément ou du pack.

La figure 8 représente la variation de la tension électrique aux bornes d'un pack, comprenant un accumulateur au lithium sans mandrin, et les variations des déformations principales maximales et minimales de l'enveloppe, mesurées par le dispositif de gestion lors d'un cycle de chargement de l'élément ou du pack.

La figure 9 représente la variation de la tension électrique aux bornes d'un pack, comprenant un accumulateur au lithium sans mandrin, et les variations des déformations principales maximales et minimales de l'enveloppe, mesurées par le dispositif de gestion lors d'un cycle de déchargement de l'élément ou du pack.

La figure 10 représente la variation de la tension électrique aux bornes d'un pack, comprenant un accumulateur au lithium sans mandrin, lors de plusieurs cycles de déchargement et de chargement.

La figure 11 représente la variation d'une fonction d'étude lors du déchargement d'un pack comprenant un accumulateur au lithium sans mandrin.

La figure 12 représente la variation d'une fonction d'étude lors du chargement d'un pack comprenant un accumulateur au lithium sans mandrin.

La figure 13 représente la variation d'une fonction d'étude lors d'une surcharge critique d'un pack comprenant un accumulateur au lithium sans mandrin.

La figure 14 représente des zones dans lesquelles une fonction d'étude évolue en fonction de l'état d'un pack comprenant un accumulateur au lithium sans mandrin.

La figure 15 représente plusieurs fonctions d'étude correspondant à différents cycles de chargement d'un pack comprenant un accumulateur au lithium avec mandrin, chaque cycle de chargement étant espacé de plusieurs centaines de cycles.

La figure 16 représente une coupe de profil d'une pluralité de jauges de contraintes fixée sur l'enveloppe d'un pack comprenant un accumulateur au lithium avec mandrin.

La figure 17 représente plusieurs fonctions d'étude d'une pluralité de jauges de contraintes sur l'enveloppe d'un élément pour deux accumulateurs différents sans mandrin.

## EXPOSÉ DÉTAILLÉ DE MODES DE RÉALISATION PARTICULIERS

L'invention vise un dispositif de gestion, permettant de contrôler l'état de charge et de sécurité (au sens déjà défini ci-dessus) d'un pack comprenant un accumulateur au lithium, et permettant de connaître en temps réel l'état de vieillissement dudit pack. Un exemple de réalisation d'un dispositif de gestion est décrit dans une première partie du présent exposé. Dans une seconde partie, un exemple de procédé d'étalonnage et d'utilisation du dispositif de gestion, permettant une utilisation optimale d'un pack est décrit. Ces deux exemples de réalisation sont complétés par plusieurs alternatives ou variantes qui peuvent être combinées ensemble pour former de nouveaux modes de réalisation.

La première partie de l'exposé détaillé porte donc sur un exemple de dispositif de gestion permettant le suivi, en temps réel, de l'état de charge ou de sécurité, ainsi que de l'état de santé, d'un pack 20 comprenant un seul accumulateur au lithium. Afin de faciliter la compréhension de l'invention par le lecteur, le dispositif de gestion 100 est représenté fixé au pack 20, mais le dispositif de gestion n'inclut pas nécessairement le pack 20.

Dans un exemple, le pack 20 comprend un accumulateur 2 au lithium de forme cylindrique. L'accumulateur est de type LiFePO$_4$/graphite et comporte une cathode 4 et une anode 6 séparées par un élément séparateur 8. L'accumulateur est enroulé sur lui-même de manière à former un cylindre creux. L'accumulateur est isolé de son environnement par une enveloppe 12 scellée, en aluminium. L'enveloppe est adaptée à la forme de l'accumulateur, elle est donc aussi de forme cylindrique. L'accumulateur peut par exemple être celui commercialisé sous la marque « A123Systems », sous la référence ANR26650-M1 (voir ci-dessus). Les dimensions du pack 20 sont de 65mm de long selon la direction (0 ; j) et de 26mmde diamètre selon la direction (0 ; i), pour un poids de 70g.

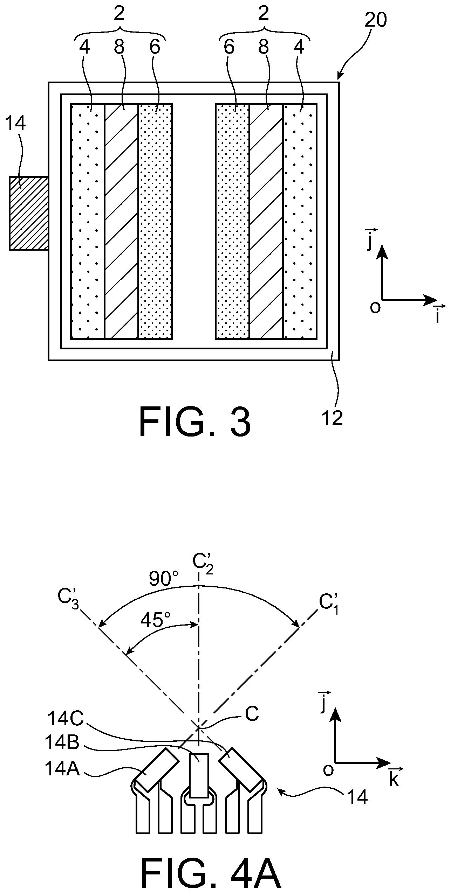

Le dispositif de gestion 100 comporte une pluralité de jauges de contraintes 14, chacune des jauges étant fixée ou maintenue sur une face externe de l'enveloppe 12, la face interne de l'enveloppe étant la face en vis-à-vis de l'accumulateur 2. De préférence, les jauges de contraintes 14 sont fixées sur une partie bombée du pack 20, avantageusement à mi-longueur dudit pack. Ces jauges de contraintes 14 comportent une première jauge de contrainte 14A, une seconde jauge de contrainte 14B et une troisième jauge de contrainte 14C (figure 4A). Les jauges de contraintes sont numérotées en fonction de leur position respective sur l'enveloppe et selon le sens de rotation trigonométrique, afin de simplifier le traitement de leurs mesures. Les trois jauges de contraintes sont non alignées et agencées de manière à pouvoir mesurer les contraintes de l'enveloppe 12 selon trois directions distinctes ou axes de contraintes. Selon un exemple, la première jauge de contraintes 14A est positionnée de sorte que son axe de contraintes (CC'$_1$) soit perpendiculaire à l'axe de contrainte (CC'$_3$) de la troisième jauge de contraintes 14C (figure 4A). La deuxième jauge de contraintes 14C est positionnée de sorte que son axe de contrainte (CC'$_2$) soit situé entre les deux axes précédents et forme un angle de 45° avec l'axe de contraintes (CC'$_1$) et (CC'$_2$). La pluralité de jauges de contraintes 14 est, selon cet exemple, une jauge rosette rectangulaire commercialisée sous la marque « Vishay » et de référence C2A-13-125LR-350. Elle est constituée par un alliage métallique de cuivre et de nickel de type « constantan », et a une résistance égale à 350 Ω, une auto-compensation thermique (A.C.T.) de 13 correspondant à un coefficient de dilatation thermique de 23,2 ppm/°C comparable à celui de l'aluminium, et chaque jauge de contraintes a une longueur égale à 3,18mm, et une largeur de grille égale à 1,78mm.

Chaque jauge de contraintes peut être connectée à une source de tension pour l'alimenter. Chaque jauge est connectée à un dispositif de mesure 40 permettant de mesurer en temps réel (t) la déformation $\varepsilon_X(t)$ subie par cette même jauge 14 (figure 5). Les mesures de déformations sont communiquées à un dispositif de calcul 50, dans le cas présent un ordinateur possédant un dispositif de stockage de valeurs de référence et un dispositif d'affichage. Le dispositif de calcul 50 permet d'effectuer des calculs à partir des mesures des jauges et selon un algorithme choisi. En fonction des résultats de cet algorithme, le dispositif de calcul peut commander de façon réversible l'ouverture ou la fermeture d'un interrupteur électrique 60, reliant les bornes de tension électrique du pack 20 à son environnement client 70. Le terme environnement client désigne l'ensemble des éléments conducteurs connectés aux bornes de tensions du pack.

L'exemple de dispositif de gestion 100 ici décrit comporte donc les dispositifs 14, 40, 50 et 60 définis ci-dessus (figure 5). En d'autres termes, le dispositif de gestion 100 n'inclut pas nécessairement le pack 20.

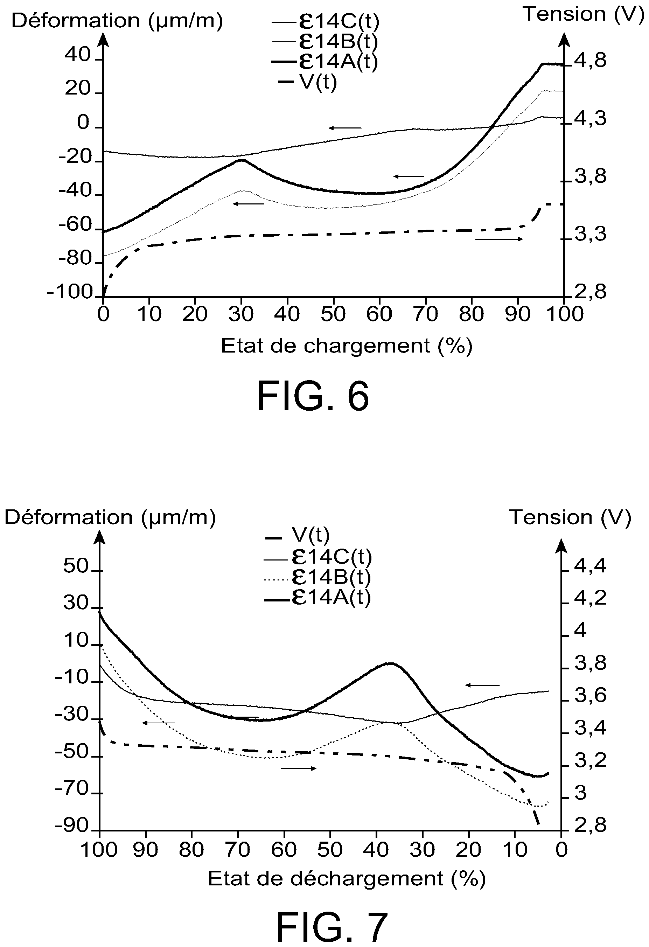

L'exposé détaillé porte à présent sur l'algorithme choisi. Plus précisément, cet algorithme permet au dispositif de gestion 100 de gérer de façon optimum le fonctionnement du pack 20. Les inventeurs ont constaté de façon surprenante que les déformations de l'enveloppe 12 du pack 20, mesurées par la pluralité de jauges de contraintes 14 lors de cycles de chargement et de déchargement dudit pack, ne sont pas linéaires. Les figures 6 et 7 représentent respectivement les déformations de l'enveloppe 12 mesurées par les jauges 14A, 14B et 14C lors d'un cycle de chargement et de déchargement du pack 20. On observe clairement sur ces deux figures qu'aucune série de mesures ($\varepsilon_{14A}(t)$, $\varepsilon_{14B}(t)$, $\varepsilon_{14C}(t)$) réalisée par une même jauge de contrainte, pour un cycle complet de chargement ou de déchargement, n'est linéaire en fonction de l'état de chargement du pack. De plus, l'amplitude des mesures réalisées par les jauges de contraintes varie en fonction de l'orientation de leur axe de contrainte (voir par exemple les mesures $\varepsilon_{14A}(t)$ et $\varepsilon_{14B}(t)$). La courbe V(t) représente l'évolution de la tension électrique aux bornes de l'accumulateur.

Il est à noter que ces résultats sont contraires à l'enseignement technique du document WO2011/072295 (figure 2), selon lequel il pourrait exister une relation linéaire entre les mesures de contraintes réalisées par une jauge de contrainte fixée sur une bande maintenant ensemble plusieurs accumulateurs, et l'état de charge complet de l'ensemble des accumulateurs.

Pour chaque jauge, les inventeurs ont souhaité s'affranchir de la variation d'amplitude des mesures fournies par cette jauge de contraintes en fonction du positionnement de son axe de contrainte sur l'enveloppe 12. Ils ont pour cela calculé l'amplitude de déformation selon l'axe de déformations maximales Ep(t) et l'amplitude de déformation selon l'axe de déformations minimales Eq(t) de l'enveloppe 12, lors des cycles de chargement et de déchargement précédents (figures 8 et 9). L'amplitude de déformation selon l'axe de déformations maximales Ep(t) est calculée selon l'équation 1 suivante :

$$Ep(t) = \frac{\varepsilon_{14A}(t) + \varepsilon_{14C}(t)}{2} + \frac{1}{\sqrt{2}} \sqrt{\left(\varepsilon_{14A}(t) - \varepsilon_{14B}(t)\right)^2 + \left(\varepsilon_{14B}(t) - \varepsilon_{14C}(t)\right)^2}$$

L'amplitude de déformation selon l'axe de déformations minimales Eq(t) est calculée selon l'équation 2 suivante :

$$Eq(t) = \frac{\varepsilon_{14A}(t) + \varepsilon_{14C}(t)}{2} - \frac{1}{\sqrt{2}} \sqrt{\left(\varepsilon_{14A}(t) - \varepsilon_{14B}(t)\right)^2 + \left(\varepsilon_{14B}(t) - \varepsilon_{14C}(t)\right)^2}$$

On peut noter sur la figure 8 que lors d'un cycle de chargement, la courbe associée aux déformations minimales (Eq(t)) évolue de façon sensiblement linéaire entre 0% et 30% du chargement de l'accumulateur 2. Au-delà, la courbe Eq(t) décroît jusqu'à 60% du chargement, puis croît de nouveau jusqu'à 100% du chargement de l'accumulateur. Le phénomène inverse est observé lors d'un cycle de déchargement de l'accumulateur 2 (figure 9). L'évolution de la courbe associée aux déformations maximales (Ep(t)) est similaire à celle de la courbe Eq(t), mais elle est d'amplitude plus réduite. En fonction de la pente des courbes Eq(t) et Ep(t), on peut donc identifier si l'accumulateur 2 dans le pack 20 est dans un cycle de chargement ou de déchargement.

Pour un cycle de chargement, entre 0 et 20% et entre 75% et 90% de l'état de chargement de l'accumulateur, les courbes Eq(t) et Ep(t) évoluent de façon sensiblement linéaire (figure 8). Il est à noter que la courbe de tension électrique (V(t)) mesurée aux bornes du pack 20 à également un comportement linéaire, mais sur des plages d'état de chargement plus réduites : entre 0 et 10% et entre 95 à 100%. Ces comportements sont également observables pour les courbes Eq(t), Ep(t) et V(t) lors d'un cycle de déchargement du pack (figure 9).

Pour déterminer l'état de chargement du pack 20 sur des plages de chargement plus larges, les inventeurs ont pensé à corréler les informations des courbes Eq(t), Ep(t) et V(t). Le tableau 1 ci-dessous montre que cette corrélation ne permet pas de connaître avec certitude l'état de chargement de l'accumulateur 2 pour certaines plages de valeurs de chargement. En effet, les plages de l'état de chargement suivantes ne peuvent pas être différenciées à partir de ces seules mesures: entre 20% et 30% et entre 55% et 75%.

Tableau 1- Détermination de l'état de chargement du pack

| Etat de chargement du pack (%) | Evolution de la courbe Eq(t) | Evolution de la courbe V(t) | Détermination de l'état de chargement du pack |
|---|---|---|---|
| 0 à 20% | ↗ | forte ↗ | Oui |
| 20 à 30% | ↗ | faible ↗ | Indéterminé |
| 30 à 55% | ↘ | faible ↗ | Oui |
| 55 à 75% | ↗ | faible ↗ | Indéterminé |
| 75 à 100% | ↗ | forte ↗ | Oui |

Il en est de même concernant un cycle de déchargement comme le montre le tableau 2. Il n'est pas possible de distinguer à partir des mesures précédentes les plages d'état de chargement suivantes : entre 82% et 64% et entre 38% et 25%.

Tableau 2 - Détermination de l'état de déchargement du pack

| Etat de chargement du pack (%) | Evolution de la courbe Eq(t) | Evolution de la courbe V(t) | Détermination de l'état de déchargement du pack |
|---|---|---|---|
| 100 à 82% | ↘ | forte ↘ | Oui |
| 82 à 64% | ↘ | faible ↘ | Indéterminé |
| 64 à 38% | ↗ | faible ↘ | Oui |
| 38 à 25% | ↘ | faible ↘ | Indéterminé |
| 25 à 0% | ↘ | forte ↘ | Oui |

Les inventeurs ont pensé à résoudre ces indéterminations en calculant la pente de la courbe Ep(t). En effet, les inventeurs ont constaté que cette pente varie en fonction des plages de chargement mises en cause. Pour cela, on effectue un cycle de chargement et de déchargement dans les plages indéterminées de chargement ou de déchargement, pour obtenir un nombre de mesures suffisant afin de distinguer ces plages de valeurs. Selon cette solution, on effectue la mesure de V(t) et le calcul de Eq(t), ainsi que dEq(t)/dt et la corrélation de ces trois données différentes (Eq(t), dEq(t)/dt, V(t)). Bien que cette solution soit techniquement réalisable, les inventeurs ont souhaité utiliser un algorithme permettant de déterminer l'état de chargement du pack 20 de façon plus rapide et plus simple.

Les inventeurs ont choisi d'utiliser les mesures réalisées par les jauges de contraintes 14A, 14B et 14C pour représenter l'évolution des contraintes de l'enveloppe 12, par une représentation graphique, selon le cercle de Mohr. L'abscisse d(t) du cercle de Mohr est calculée selon l'équation 3 suivante :

$$d(t) = \frac{\varepsilon_{14A}(t) + \varepsilon_{14C}(t)}{2}$$

Le rayon r(t) du cercle de Mohr est calculé selon l'équation 4 suivante :

$$r(t) = \frac{1}{\sqrt{2}} \sqrt{\left(\varepsilon_{14A}(t) - \varepsilon_{14B}(t)\right)^2 + \left(\varepsilon_{14B}(t) - \varepsilon_{14C}(t)\right)^2}$$

Les valeurs d(t) et r(t) sont calculées en temps réel, par le dispositif de calcul 50. En d'autres termes, l'algorithme comprend une étape de calcul de d(t) et de r(t).

L'algorithme comporte une autre étape de calcul, permettant de comparer le couple de valeurs (d(t), r(t)) calculé avec une liste de couples de valeurs de référence (d$_r$, r$_r$). Lorsque le couple de valeurs (d(t), r(t)) calculés correspond à un couple de valeurs de référence, dit critique (d$_{rc}$, r$_{rc}$), le dispositif de calcul commande l'ouverture ou le maintien ouvert de l'interrupteur électrique 60 de manière à isoler électriquement le pack 20 de son environnement client 70. A l'inverse, lorsque le couple de valeurs (d(t), r(t)) calculé correspond à un couple de valeurs de référence, dit normal (d$_m$, r$_m$), le dispositif de calcul commande la fermeture ou le maintien fermé de l'interrupteur électrique 60, de manière à connecter électriquement le pack 20 à son environnement client 70.

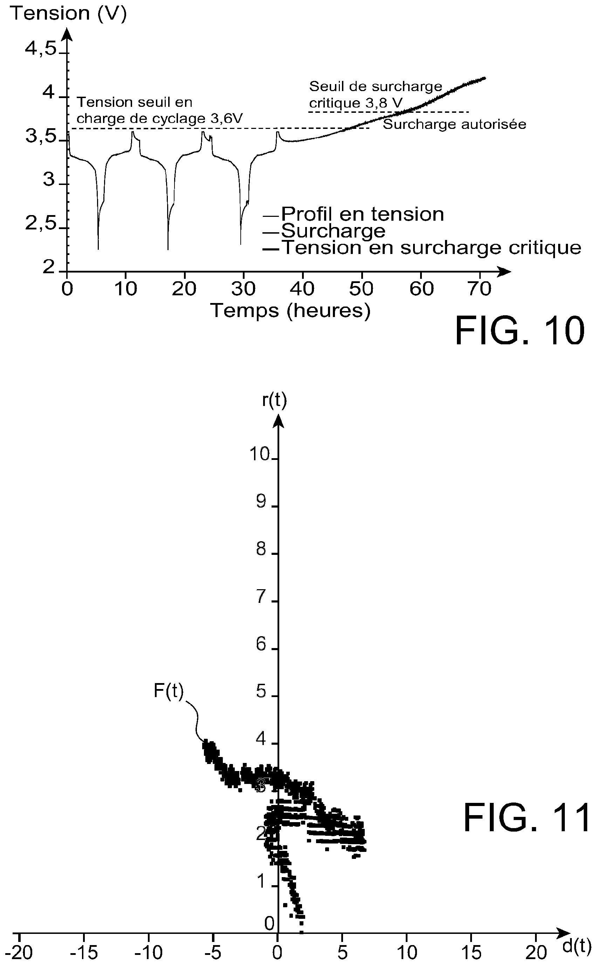

A présent, on décrit un procédé d'étalonnage d'un dispositif de gestion 100 tel que décrit ci-dessus, en vue de déterminer les valeurs de référence normales et critiques. Plus précisément, on décrit un procédé permettant de déterminer les couples de valeurs de référence du dispositif de gestion 100 fixé sur un pack 20 témoin (figure 5). Le pack témoin est chargé et déchargé dans des conditions normales et anormales d'utilisation, de manière à ce que chaque couple de valeurs mesurées (d(t), r(t)) puisse être associé à un couple de valeurs de référence critique ou normal. On définit des conditions anormales d'utilisation du pack 20 témoin comme étant des conditions apparaissant dans un état de sécurité (voir ci-dessus). Selon un exemple de procédé d'étalonnage ci-dessous, l'accumulateur 2 du pack témoin (de type « A123Systems » et commercialisé sous la référence ANR26650-M1, de capacité nominale Cn=2300mAh) subit 3 cycles de chargement et de déchargement à un régime de courant de Cn/5h entre 2 seuils de tension de 3,6V en charge (tel que recommandé par le fabricant) et de 2,3V en décharge (figure 10). Une surcharge à la fin du troisième cycle est imposée par l'application d'un courant de charge faible afin que la tension de l'élément dépasse la tension de fin de charge recommandée par le fabricant (3,6V). La tension de l'élément croît donc lentement pour atteindre une zone de surcharge autorisée entre 3,6V et 3,8V, puis une zone de surcharge critique pour une tension supérieure à 3,8V.

Lors de ces cycles, le dispositif 50 calcule en temps réel les couples de valeurs (d(t), r(t)) et mémorise ces valeurs dans des moyens de stockage. A chaque instant, on peut également identifier à l'aide de la figure 10, dans quel état se trouve l'accumulateur : charge normale, décharge normale, surcharge critique, décharge critique. On peut donc associer à chaque couple de valeurs (d(t), r(t)), à l'aide en fonction de la figure 10, l'état correspondant à l'état de l'accumulateur.

Les couples de valeurs (d(t), r(t)) peuvent être représentées graphiquement dans un graphique d'étude, c'est-à-dire, un repère orthogonal comportant en abscisse les valeurs d(t) et en ordonnée les valeurs r(t). En d'autres termes, les couples de valeurs (d(t), r(t)) peuvent être les coordonnées d'une courbe d'étude f(t) tracée en temps réel dans le graphique d'étude.

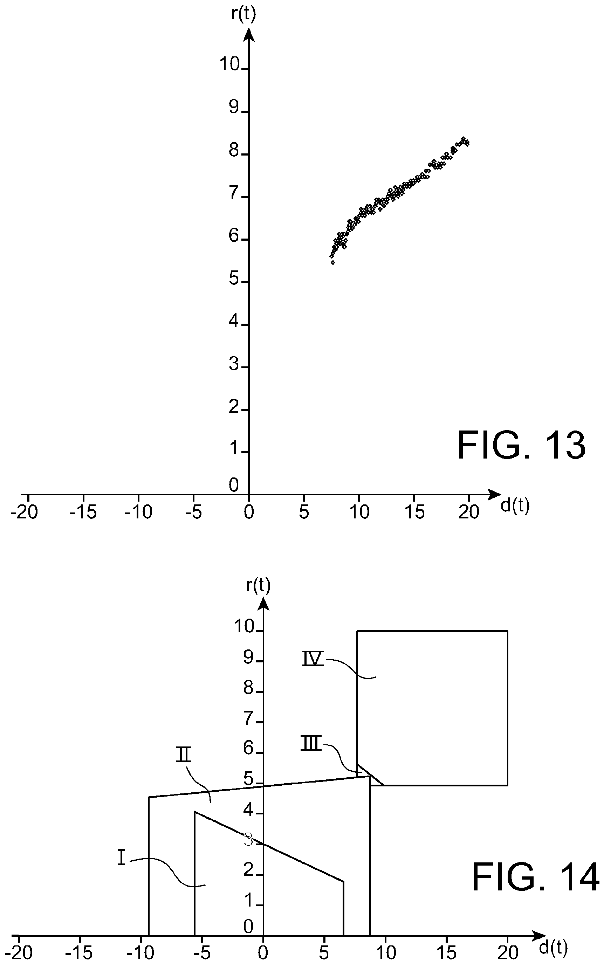

La figure 11 représente l'évolution de la courbe d'étude f(t) lors des cycles de déchargement réalisé entre 0 et 5 heures, 12 et 17 heures, 24 et 29 heures sur le graphique de la figure 10. Au cours de ce cycle, les valeurs d(t) diminuent et les valeurs r(t) augmentent. La fonction d'étude f(t) croît en s'éloignant vers la gauche de l'axe des ordonnées. Le pack témoin est déchargé plusieurs fois de manière à déterminer une zone sur le graphique d'étude correspondant à un comportement normal de déchargement du pack. Selon le présent exemple, cette zone I de décharges normales est comprise entre (d=-5,56; r=4,01) et (d=6,61 ; r=1,77)(figure 14).

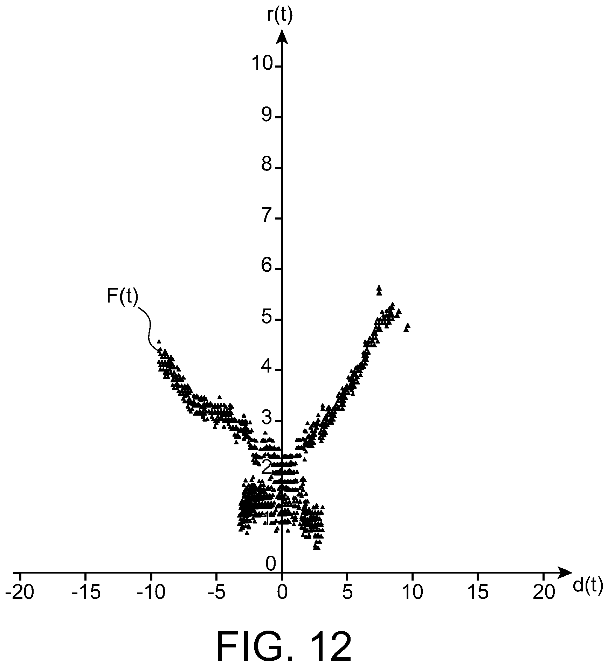

La figure 12 représente l'évolution de la courbe d'étude f(t) lors des trois cycles de chargement avec le seuil d'arrêt en tension 3,6V réalisés entre 6 et 11 heures, 18 et 23 heures, 30 et 35 heures et la surcharge autorisée entre 35 et 55 heures jusqu'à la tension maximum recommandée par le fabriquant (3,8V) sur le graphique de la figure 10. On observe que les valeurs d(t) augmentent et les valeurs r(t) diminuent pour un état de chargement normal, et que les valeurs d(t) et r(t) augmentent pour un état de surcharge autorisé (figure 12) La zone du graphique d'étude correspondant aux charges normales (tensions inférieures à 3,6V) correspond à une zone II de charges normales comprise entre (d=-9,39 ; r=4,57) et (d=8,47 ; r=5,30)(figure 14). La zone III correspondant aux surcharges autorisées (tensions comprises entre 3,6V et 3,8V) correspond à une zone de surcharges autorisées comprise entre (d=9,62 ; r=4,88) et (d=7,42; r=5,62)(figure 14).

Lorsque le courant de charge est maintenu ce qui conduit à l'augmentation de la tension à sa valeur maximale, c'est-à-dire au-delà du seuil maximum d'arrêt de charge recommandé de 3,8V, on constate que la fonction d'étude f(t) sort de la zone de surcharges autorisée (figure 13). La zone IV de surcharges critiques correspond à une zone au-delà de (d=7,65 ; r=5,45)(figure 14). En d'autres termes, la zone de surcharges critiques correspond à une zone définie par d>7,65 et r>5,45.

Une zone de surdécharge autorisée et une zone de surdécharge non autorisée ou critique peuvent être déterminées de la même façon. Pour plus de clarté, ces zones ne sont pas représentées sur les figures.

La fonction d'étude f(t) permet avantageusement de représenter graphiquement, simplement et en temps réel l'état du pack témoin. En fonction de la position de la courbe d'étude f(t) dans l'une des zones ci-dessus, on peut connaître dans quel état se trouve le pack : état de charge ou état de sécurité (figure 14).

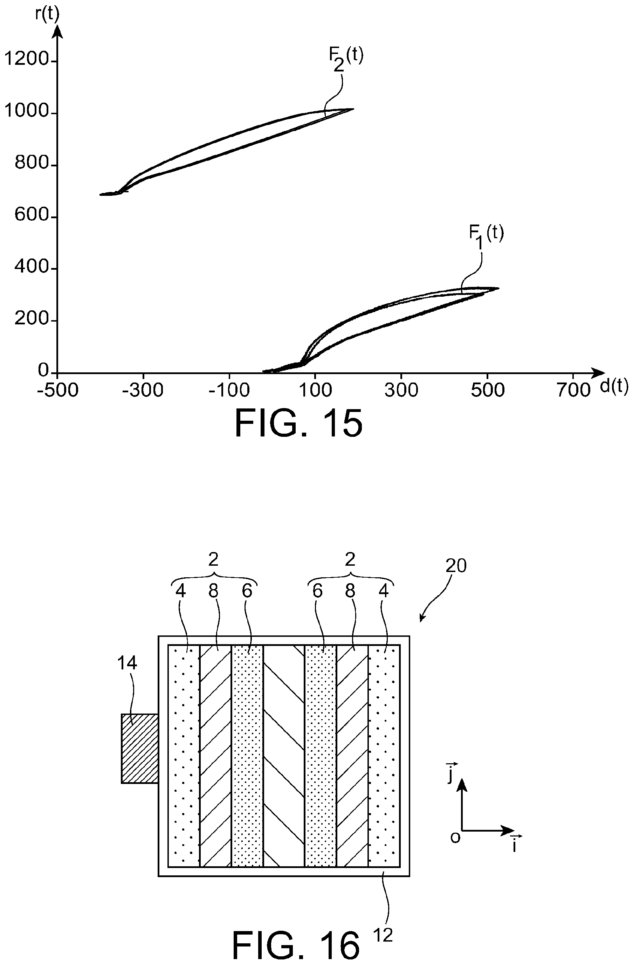

On a pu ainsi observer que la position de la fonction d'étude f(t) dans le graphique d'étude change en fonction du nombre de cycles d'utilisation du pack témoin. Ce phénomène est illustré sur la figure 15 pour 3 cycles de chargement et déchargement normaux d'un accumulateur de type $LiCoO_2$- $LiMn_2O_4$/C avec mandrin, réalisé avant et après la réalisation d'un nombre de cycles d'utilisation. L'élément considéré est cette fois un élément « Samsung » sous la référence ICR 18650-30A avec une capacité nominale Cn de 3000 mAh et une tension nominale de 3,78V. Ses dimensions sont de 65 mm de long et 18 mm de diamètre, pour un poids de 48g. La jauge utilisée dans l'exemple présentée ici est une jauge rosette triangulaire de marque « Vishay » et de référence C2A-06-062LR-120, constitué avec un alliage métallique de cuivre et de nickel, le constantan. Elle présente une résistance de $120\Omega$, une auto-compensation thermique (A.C.T.) de 06 correspondant à un coefficient de dilatation thermique de 11,3 ppm/°C identique au coefficient de dilatation de l'acier. Chaque jauge de la rosette a une longueur de 1,52mm et une largeur de grille de 1,27mm.

On peut observer sur cette figure que lorsque l'accumulateur est neuf, la fonction d'étude $f_1$(t) est comprise dans une zone délimitée par des valeurs de d(t) comprises entre -10 et 515, et par des valeurs de r(t) comprises entre 0 et 330. Après 145 cycles de chargement et de déchargement, la fonction $f_2$(t) se déplace dans une seconde zone du graphique d'étude, délimitée par des valeurs de d(t) comprises entre -400 et 185, et par des valeurs de r(t) comprises entre -685 et 1 020. Le déplacement de la fonction f(t) dans le graphique d'étude permet ainsi de suivre l'état de santé de l'accumulateur en temps réel. De la même manière que précédemment, un opérateur peut associer à chaque couple de valeurs calculé (d(t) ; r(t)) un état de vieillissement du pack témoin.

A partir du procédé d'étalonnage décrit ci-dessus, il est possible de déterminer les couples de valeurs de référence $(d_r; r_r)$ mentionnés précédemment. Plus précisément, les couples de valeurs calculés (d(t) ; r(t)) par le dispositif de gestion 100 fixé sur le pack témoin (figue 5) sont référencés comme étant :

- normaux $(d_{rn}, r_{rn})$ lorsqu'ils appartiennent à la zone de décharges normales ou à la zone de charges normales ou à la zone de surcharges autorisées ou à la zone de surdécharges autorisées; ou
- critiques $(d_{rc}, r_{rc})$ lorsqu'ils n'appartiennent pas à une des zones définies ci-dessus.

De cette façon, le dispositif de gestion 100 est adapté pour être utilisé avec des packs 20 identiques ou similaires au pack témoin.

A présent, on décrit un procédé d'utilisation d'un dispositif de gestion 100. Pour rappel, un dispositif de gestion selon l'invention comporte des moyens 14, 40, 50, 60 décrits ci-dessus (figure 5). Un exemple de procédé d'utilisation d'un dispositif de gestion peut comprendre les étapes suivantes, réalisées sans ordre particulier :

- fixer la pluralité de jauges de contraintes 14 sur une enveloppe 12 d'un pack 20 ;
- connecter l'interrupteur électrique 60 à au moins une borne de tension du pack 20 ;
- mettre en marche le dispositif de calcul 50 de manière à ce que l'algorithme choisi ci-dessus puisse être réalisé.

A présent, on décrit des variantes de l'exemple de dispositif de gestion 100.

Les jauges de contraintes peuvent être réalisées en, ou comporter un, matériau piézoélectrique qui crée une tension électrique mesurable lorsqu'il est déformé.

Les jauges de contraintes 14A, 14B, 14C peuvent également être agencées de sorte que leurs axes de contraintes forment des angles facilitant le calcul des valeurs d(t) et r(t). Les axes de contraintes de jauges peuvent par exemple former entre eux des angles de valeurs simples, tels que 45°, ou 60° ou 120°. Les jauges peuvent être agencées selon une géométrie de type rosette delta (figure 4B) ou selon l'agencement représenté en figure 4C.

La pluralité de jauges de contraintes 14 peut aussi être une jauge rosette rectangulaire caractérisée par un facteur de jauge nominal et une déformation maximale correspondante aux amplitudes de déformation à mesurer, une résistance et un coefficient de dilation. Pour améliorer la précision des mesures de déformation de jauges de contraintes ci-dessus, indépendamment de la température et sans avoir à disposer d'un système de régulation de température pour chaque jauge, il est également possible d'ajouter une jauge libre (qui ne subit que l'influence de la température) fixée sur un plaque support de même nature que celle sur laquelle la jauge de mesure est fixée et de soustraire sa réponse aux déformations enregistrées par les autres jauges. Il est aussi possible de mesurer la température ambiante à l'aide d'une sonde thermique, puis d'appliquer une correction aux valeurs de déformation mesurées par les jauges de contraintes après calibration (mesure de la déformation de la jauge « à blanc » en fonction de la température).

Selon une autre variante, concernant le dispositif de calcul 50 peut comporter une interface de visualisation permettant à un utilisateur du pack 20 de visualiser la fonction d'étude f(t), en temps réel.

Le dispositif de calcul 50 peut également comporter une interface de type clavier, permettant à l'utilisateur du pack 20 de contrôler l'état de chargement et/ou l'état de déchargement de l'accumulateur en fonction du comportement de la fonction f(t) dans le graphique d'étude.

Selon une application, le dispositif de gestion 100 peut être fixé sur un pack 20 comprenant un accumulateur 2 de forme cylindrique ou prismatique.

Selon un autre exemple d'application, le dispositif de gestion 100 peut également être fixé sur un pack 20 comprenant un accumulateur 2 au lithium de forme cylindrique, de type $LiMn_2O_4$-$LiCoO_2$/graphite (LMO-LCO/G). L'accumulateur peut être enroulé autour d'un noyau central ou mandrin 10 en plastique ou en métal (figure 16). Le pack ici décrit peut par exemple être commercialisé sous la marque « Samsung », sous la référence ICR 18650-30A, comprenant un accumulateur caractérisé par une capacité nominale de 3000mAh et une tension nominale de 3,78V. Les dimensions de l'élément sont de 65 mm de long selon la direction (0 ; j) et de 18 mm de diamètre selon la direction (0 ; i), pour un poids de 48g.

Selon encore une autre application, un pack 20 peut comporter plusieurs accumulateurs, dont les bornes de connexion sont connectées aux bornes de connexion du pack. Chaque accumulateur peut comporter son propre dispositif de gestion 100, de sorte à pouvoir connecter ou déconnecter électriquement ledit accumulateur du pack. Plus précisément, l'interrupteur électrique 60 de chaque accumulateur est connecté entre une borne de connexion de cet accumulateur et une borne de connexion du pack de manière à connecter ou déconnecter les deux bornes, de façon réversible.

Selon encore une autre application, les jauges de contraintes peuvent être collées ou fixées à l'intérieur de l'enveloppe de protection 12, ou sur un collecteur métallique externe à l'accumulateur 2. Les jauges de contraintes 14A, 14B et 14C peuvent par exemple être collées sur une face interne à l'enveloppe ou sur le collecteur métallique externe de l'accumulateur ou sur un feuillard métallique supportant l'électrode du dernier enroulement de l'accumulateur 2 ou sur la dernière couche d'un accumulateur de forme prismatique. Les jauges peuvent également être collées sur une enveloppe plastique ou un film permettant de maintenir ensemble les éléments composant l'accumulateur 2.

A présent, l'exposé détaillé décrit plusieurs variantes du procédé d'utilisation du dispositif de gestion 100.

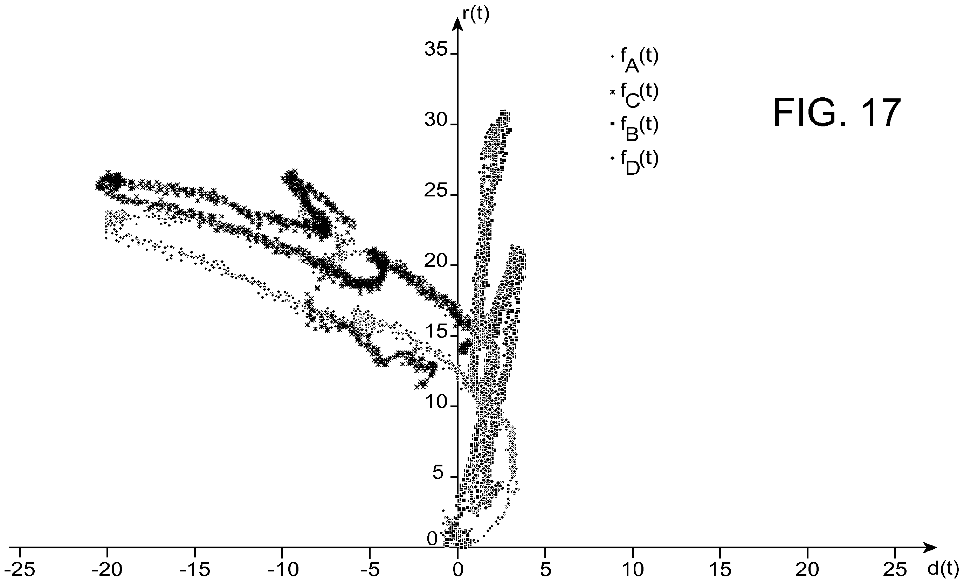

La position optimum de la pluralité de jauges de contraintes 14 sur l'enveloppe 12 du pack 20 peut être déterminée de façon empirique pour chaque type de pack 20. En effet, il a été constaté que le comportement de la fonction d'étude f(t) varie sensiblement en fonction de la position du dispositif des jauges de contraintes sur un même pack. Sur la figure 17, il est représenté, pour un premier cycle de chargement et de déchargement, le comportement d'une fonction d'étude correspondant au positionnement du dispositif de jauge de contrainte 14 à mi longueur du pack $f_A(t)$ et au niveau d'une des bornes de connexion du pack : $f_B(t)$. Il est également représenté, sur la figure 17, le comportement d'une fonction d'étude correspondant à un troisième cycle de fonctionnement du pack lorsque le dispositif de jauge de contrainte 14 est à mi longueur $f_C(t)$ et au niveau des bornes de connexion $f_D(t)$ du même pack.

On a également observé que le comportement de la fonction d'étude varie sensiblement en fonction de la nature des matériaux composant l'accumulateur, de la quantité de matière active par unité de surface (grammage), de la forme de l'accumulateur, du nombre d'enroulement et du nombre d'empilement des éléments composant l'accumulateur, de la présence ou non d'un mandrin au centre de l'enroulement, de la forme et de la nature de l'enveloppe du pack (plastique, acier inoxydable, aluminium ou autre), etc.

Par exemple, un accumulateur cylindrique enroulé autour d'un mandrin (figure 16) déforme plus nettement l'enveloppe de protection 12 du pack 20. A l'inverse, lorsque l'accumulateur 2 ne comporte pas de mandrin central, l'expansion volumique se fait vers l'intérieur et vers l'extérieur de l'enroulement ; de ce fait, les déformations enregistrées par les jauges de contraintes relatent moins fidèlement les déformations subies par l'accumulateur 2. Autrement dit, la présence d'un mandrin central dans un accumulateur cylindrique permet d'obtenir des informations plus précises sur son état par rapport à un même accumulateur ne comportant pas de mandrin.

On a également constaté que les variations de déformations des jauges de contraintes sont plus importantes lorsque lesdites jauges sont collées sur un accumulateur déchargé. Il est donc préconisé de procéder à la fixation des jauges de contraintes sur l'enveloppe du pack ou sur l'accumulateur présent dans l'enveloppe, lorsque l'accumulateur est dans un état déchargé ou totalement déchargé.

En conclusion, l'invention concerne un dispositif de gestion d'un pack comprenant un accumulateur au lithium ou de tout autre type d'accumulateur de conception comparable (nickel-cadmium ou nickel metal-hydrure par exemple), ainsi qu'un procédé d'utilisation dudit dispositif. Grâce au dispositif de gestion, il est possible de suivre en temps réel l'état de charge ou de sécurité du pack, ainsi que son état de vieillissement. A partir de ces informations, le dispositif de gestion contrôle l'interface entre le pack et son environnement client de manière à éviter une utilisation abusive du pack, susceptible de le détériorer de façon irréversible ou de présenter des risques pour son environnement. Les actions du dispositif de gestion sont avantageusement réversibles au niveau du pack et ne le dégradent pas.

**Revendications**

1. Dispositif de gestion (100) d'un accumulateur (2), comportant :

   - une pluralité de jauges de contraintes (14) comprenant au moins trois jauges de contraintes (14A, 14B, 14C) configurées pour pouvoir être maintenues au contact de l'enveloppe d'un accumulateur, ;
   - un dispositif de mesure (40) permettant de mesurer les déformations subies par chaque jauge selon son axe de contraintes ;
   - un interrupteur électrique (60) réversible, l'interrupteur permettant de connecter et/ou de déconnecter électriquement l'accumulateur (2) de son environnement client ;
   - un dispositif de calcul (50) commandant l'ouverture et la fermeture de l'interrupteur électrique (60), en fonction des mesures réalisées par le dispositif de mesure (40),

   Le dispositif étant **caractérisé en ce que** les jauges de contraintes sont agencées de façon à mesurer les contraintes selon au moins trois axes de contraintes distincts.

2. Dispositif de gestion (100) d'un accumulateur selon la revendication 1, le dispositif de calcul (50) comportant des moyens de stockage comportant une première série de valeurs et une seconde série de valeurs différente de la première série de valeurs, le dispositif de calcul commandant :

   - la fermeture de l'interrupteur électrique (60) lorsque les mesures réalisées par le dispositif de mesure (40) appartiennent à la première série de valeurs ; ou
   - l'ouverture de l'interrupteur électrique (60) lorsque les mesures réalisées par le dispositif de mesure (40) appartiennent à la seconde série de valeurs.

3. Dispositif de gestion (100) d'un accumulateur selon la revendication 2, le dispositif de calcul (50) mettant en oeuvre un algorithme comprenant une étape de calcul de l'évolution des contraintes mesurées par la pluralité de jauges de contraintes (14).

4. Dispositif de gestion (100) d'un accumulateur selon la revendication 3, le dispositif de calcul (50) mettant en oeuvre un algorithme identifiant le résultat du calcul de l'évolution des contraintes, mesurées par la pluralité de jauges de contraintes (14), dans la première série de valeurs ou dans la seconde série de valeurs stockées par le dispositif de calcul.

5. Dispositif de gestion (100) d'un accumulateur selon l'une des revendications 3 ou 4, l'étape de calcul de l'évolution des contraintes comprenant le calcul de l'abscisse (d(t)) et du rayon (r(t)) du cercle de Mohr à un temps t.

6. Dispositif de gestion (100) selon l'une des revendications précédentes, la pluralité de jauges de contraintes (14) étant maintenue au contact d'une enveloppe (12) comportant une borne de connexion, et contenant au moins un accumulateur (2) comportant au moins une borne de connexion, de sorte que les jauges de contraintes (14A, 14B, 14C) mesurent les contraintes mécaniques exercées sur l'enveloppe (12).

7. Dispositif de gestion (100) selon la revendication précédente, une borne de connexion de l'enveloppe (12) étant connectée à l'interrupteur électrique (60) appartenant au dispositif de gestion (100) et à une borne de connexion de l'accumulateur (2).

8. Dispositif de gestion (100) selon la revendication 6 ou 7, l'accumulateur (2) étant enroulé autour d'un mandrin (10).

9. Dispositif de gestion (100) selon l'une des revendications 6 à 8, l'accumulateur (2) étant un accumulateur au lithium.

10. Pack (20) comprenant une enveloppe (12) comportant une borne de connexion, reliée aux bornes de connexion appartenant à au moins deux accumulateurs (2) contenus dans ladite enveloppe (12), chaque accumulateur (2) comportant un dispositif de gestion (100) selon la revendication 6 ou 7.

11. Procédé d'étalonnage d'un dispositif de gestion (100) selon l'une des revendications 6 à 9, comprenant une étape d'enregistrement d'une première série de mesures, sur le dispositif de stockage du dispositif de calcul (50), lesdites mesures étant réalisées par le dispositif de mesure (40), lors du chargement et du déchargement d'un accumulateur (2), de sorte à préserver l'intégrité de l'accumulateur.

12. Procédé d'étalonnage d'un dispositif de gestion (100) selon l'une des revendications 6 à 9 et 11, comprenant une étape d'enregistrement d'une seconde série de mesures, sur le dispositif de stockage du dispositif de calcul (50), lesdites mesures étant réalisées par le dispositif de mesure (40), lors du chargement et du déchargement d'un accumulateur (2), de sorte à endommager de façon irréversible l'intégrité de l'accumulateur.

**Patentansprüche**

1. Vorrichtung (100) zur Steuerung eines Akkumulators (2), umfassend:

- eine Mehrzahl von Spannungslehren (14), umfassend wenigstens drei Spannungslehren (14A, 14B, 14C), die dazu ausgelegt sind, in Kontakt mit der Umhüllung eines Akkumulators gehalten werden zu können;
- eine Messvorrichtung (40), die es erlaubt, die Verformungen zu messen, die jede Lehre entlang ihrer Spannungsachse erfährt;
- einen reversiblen elektrischen Unterbrecher (60), wobei es der Unterbrecher erlaubt, den Akkumulator (2) elektrisch mit/von seiner Benutzerumgebung zu verbinden/zu lösen;
- eine Rechenvorrichtung (50), die das Öffnen und das Schließen des elektrischen Unterbrechers (60) als Funktion der Messungen steuert, die durch die Messvorrichtung (40) realisiert werden,

wobei die Vorrichtung **dadurch gekennzeichnet ist, dass** die Spannungslehren derart ausgelegt sind, dass sie die Spannungen entlang wenigstens drei verschiedenen Spannungsachsen messen.

2. Vorrichtung (100) zur Steuerung eines Akkumulators nach Anspruch 1, wobei die Rechenvorrichtung (50) Speichermittel umfasst, die eine erste Serie von Werten und eine zweite Serie von Werten enthalten, die von der ersten Serie von Werten verschieden ist, wobei die Rechenvorrichtung Folgendes steuert:

- das Schließen des elektrischen Unterbrechers (60), wenn die durch die Messvorrichtung (40) realisierten Messungen zur ersten Serie von Werten gehören; oder
- das Öffnen des elektrischen Unterbrechers (60), wenn die durch die Messvorrichtung (40) realisierten Messungen zur zweiten Serie von Werten gehören.

3. Vorrichtung (100) zur Steuerung eines Akkumulators nach Anspruch 2, wobei die Rechenvorrichtung (50) einen Algorithmus verwendet, der einen Schritt der Berechnung der Evolution der Spannungen enthält, die durch die Mehrzahl von Spannungslehren (14) gemessen werden.

4. Vorrichtung (100) zur Steuerung eines Akkumulators nach Anspruch 3, wobei die Rechenvorrichtung (50) einen Algorithmus verwendet, der das Ergebnis der Berechnung der Evolution der Spannungen, gemessen durch die Mehrzahl von Spannungslehren (14), in der ersten Serie von Werten oder in der zweiten Serie von Werten identifiziert, die durch die Rechenvorrichtung gespeichert werden.

5. Vorrichtung (100) zur Steuerung eines Akkumulators nach einem der Ansprüche 3 oder 4, wobei der Schritt der Berechnung der Evolution der Spannungen die Berechnung der Abszisse (d(t)) und des Radius (r(t)) des Mohr-Kreises zu einem Zeitpunkt t umfasst.

6. Vorrichtung (100) zur Steuerung nach einem der vorhergehenden Ansprüche, wobei die Mehrzahl von Spannungslehren (14) in Kontakt mit einer Umhüllung (12) gehalten wird, die eine Anschlussklemme umfasst, und wenigstens einen Akkumulator (2) enthält, der wenigstens eine Anschlussklemme umfasst, derart, dass die Spannungsklemmen (14A, 14B, 14C) die mechanischen Spannungen messen, die auf die Umhüllung (12) ausgeübt werden.

7.  Vorrichtung (100) zur Steuerung nach dem vorhergehenden Anspruch, wobei eine Anschlussklemme der Umhüllung (12) mit dem elektrischen Unterbrecher (60) verbunden ist, der zur Steuerungsvorrichtung (100) gehört, und mit einer Anschlussklemme des Akkumulators (2).

8.  Vorrichtung (100) zur Steuerung nach Anspruch 6 oder 7, wobei der Akkumulator (2) um einen Dorn (10) gewickelt ist.

9.  Vorrichtung (100) zur Steuerung nach einem der Ansprüche 6 bis 8, wobei der Akkumulator (2) ein Lithium-Akkumulator ist.

10. Packung (20), umfassend eine Umhüllung (12), die eine Anschlussklemme umfasst, welche mit den Anschlussklemmen verbunden ist, die zu wenigstens zwei Akkumulatoren (2) gehören, die in der Umhüllung (12) enthalten sind, wobei jeder Akkumulator (2) eine Vorrichtung (100) zur Steuerung nach Anspruch 6 oder 7 umfasst.

11. Verfahren zur Eichung einer Vorrichtung (100) zur Steuerung nach einem der Ansprüche 6 bis 9, umfassend einen Schritt der Speicherung einer ersten Serie von Messungen auf der Speichervorrichtung der Rechenvorrichtung (50), wobei die Messungen durch die Messvorrichtung (40) während des Ladens und des Entladens eines Akkumulators (2) derart realisiert werden, dass die Integrität des Akkumulators gewahrt wird.

12. Verfahren zur Eichung einer Vorrichtung (100) zur Steuerung nach einem der Ansprüche 6 bis 9 und 11, umfassend einen Schritt der Speicherung einer zweiten Serie von Messungen auf der Speichervorrichtung der Rechenvorrichtung (50), wobei die Messungen durch die Messvorrichtung (40) während des Ladens und des Entladens eines Akkumulators (2) derart realisiert werden, dass die Integrität des Akkumulators auf irreversible Weise geschädigt wird.

**Claims**

1.  Device for managing (100) an accumulator (2), including:

    - a plurality of strain gauges (14) including at least three strain gauges (14A, 14B, 14C), the strain gauges being arranged so as to measure stresses along at least three distinct stress axes;
    - a measuring device (40) for measuring the strains undergone by each gauge along its stress axis;
    - a reversible electrical switch (60), the switch enabling the accumulator (2) to be electrically connected to and/or disconnected from its client environment;
    - a calculating device (50) controlling opening and closing of the electrical switch (60), depending on the measurements carried out by the measuring device (40).

2.  Device for managing (100) an accumulator according to claim 1, the calculating device (50) including storage means including a first series of values and a second series of values being different from the first series of values, the calculating device controlling:

    - closing the electrical switch (60) when the measurements carried out by the measuring device (40) belong to the first series of values; or
    - opening the electrical switch (60) when the measurements carried out by the measuring device (40) belong to the second series of values.

3.  Device for managing (100) an accumulator according to claim 2, the calculating device (50) implementing an algorithm comprising a step of calculating the evolution of the stresses measured by the plurality of strain gauges (14).

4.  Device for managing (100) an accumulator according to claim 3, the calculating device (50) implementing an algorithm identifying the calculation result of the evolution of the stresses, measured by the plurality of strain gauges (14), in the first series of values or in the second series of values stored by the calculating device.

5.  Device for managing (100) an accumulator according to one of claims 3 or 4, the step of calculating the evolution of the stresses comprising calculating the abscissa (d(t)) and the radius (r(t)) of the Mohr circle at a time t.

6. Managing device (100) according to one of the preceding claims, the plurality of strain gauges (14) being held in contact with a cover (12) including a connection terminal, and containing at least one accumulator (2) including at least one connection terminal, such that the strain gauges (14A, 14B, 14C) measure the mechanical stresses exerted on the cover (12).

7. Managing device (100) according to the preceding claim, a connection terminal of the cover (12) being connected to the electrical switch (60) belonging to the managing device (100) and to a connection terminal of the accumulator (2).

8. Managing device (100) according to claim 6 or 7, the accumulator (2) being wound around a mandrel (10).

9. Managing device (100) according to one of claims 6 to 8, the accumulator (2) being a lithium accumulator.

10. Pack (20) comprising a cover (12) including a connection terminal, connected to the connection terminals belonging to at least two accumulators (2) contained in said cover (12), each accumulator (2) including a managing device (100) according to claim 6 or 7.

11. Method for calibrating a managing device (100) according to one of claims 6 to 9, comprising a step of recording a first series of measurements, on the storage device of the calculating device (50), said measurements being carried out by the measuring device (40), upon charging and discharging an accumulator (2), so as to maintain the integrity of the accumulator.

12. Method for calibrating a managing device (100) according to one of claims 6 to 9 and 11, comprising a step of recording a second series of measurements, on the storage device of the calculating device (50), said measurements being carried out by the measuring device (40), upon charging and discharging an accumulator (2), so as to prevent an irreversible damage of the integrity of the accumulator.

FIG. 1

Volt                                                                     Force de contrainte

Etat de chargement

FIG. 2

## FIG. 3

## FIG. 4A

14A

14C

14

FIG. 4B

14B

14

FIG. 4C

100

70

60

20

12

14

40

50

$\vec{j}$

o

$\vec{k}$

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

EP 2 989 677 B1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6407553 B
- WO 2011072295 A
- DE 102010013017
- KR 20080109121
- JP S5834577 B

**Littérature non-brevet citée dans la description**

- **P. TAHERI ; S. HSIEH ; M.BAHRAMI.** Investigating electrical contact résistance losses in lithium-ion battery assemblies for hybrid and electric vehicles. *Journal of Power Sources,* 2011, vol. 196, 6525-6533
- **P. ARORA ; Z. ZHANG.** Battery Separators. *Chem. Rev.,* 2004, vol. 104, 4419-4462
- **Z. CHEN ; Y. QIN ; K. AMINE.** Redox shuttles for safer lithium-ion batteries. *Electrochimica Acta,* 2009, vol. 54, 5605-5613
- **D. V. SAFRONOV ; S. A. NOVIKOVA ; A. M. SKUNDIN ; A. B. YAROSLAVTSEV.** Lithium Intercalation and Deintercalation Processes in $Li_4Ti_5O_{12}$ and $LiFePO$. *Inorganic Materials,* 2012, vol. 48 (1), 57-61